# EUROPEAN PATENT APPLICATION

(11) **EP 2 913 459 A1**
(43) Date of publication of application: **02.09.2015**
(21) Application number: 14156729.7
(22) Date of filing: 26.02.2014
(51) Int. Cl.: E04H 1/12, B61D 35/00, B63B 29/14, B60R 15/04, E03D 7/00

(54) **A kit for assembling mobile toilet facilities**

(71) Applicant: MB Elettronica S.R.L., 52044 Cortona (Arezzo) (IT)
(72) Inventor: Banelli, Roberto, 52044 Terentola (AREZZO) (IT); Banelli, Daniela, 52044 Terentola (AREZZO) (IT)
(74) Representative: Paparo, Aldo

(57) **Abstract**

A kit (1) for assembling mobile toilet facilities comprising a plurality of panels (2) for forming walls (3); at least one door (6) associable with the panels (2) for forming a cabin (4); a WC (17) fixable to one of the panels (2) to be installed inside the cabin (4); a wash basin (9) fixable to one of the panels (2) to be installed inside the cabin (4). The kit (1) further comprises one or more reinforcement areas (14) that are configured so as to support at least the wash basin (9). The reinforcement areas (14) are arranged horizontally.

## Description

The present invention relates to a kit for assembling mobile toilet facilities, i.e. a set of components predisposed for assembling toilet facilities. Such toilet facilities are of the mobile type, i.e. installable and usable on vehicles, such as, for example, trains, buses or the like.

In particular, the term mobile means a kit for assembling toilet facilities being, in the disassembled state, compact and easily transportable, by hand or with a means of transport, with respect to the known art. Furthermore, the toilet facilities assembled based on the kit according to the present invention may also be of the type used in parks, places and/or events where people gather outdoors such as, for example, a concert, construction sites and the like.

In further detail, the toilet facilities based on the kit according to the present invention, after temporary use, can also be transported by hand towards a predetermined place, for example, for maintenance or storage. There are toilet facilities of the prior art comprising a cabin having a door. Inside the cabin a toilet and, optionally, a wash basin are installed. In particular, such toilet facilities are made and assembled in the factory as a single block, then transported and installed in the site where they will be subsequently used.

Disadvantageously, the positioning of such toilet facilities on a vehicle, such as a carriage of a passenger train, is extremely problematic. In fact, it is necessary to remove the roof of the vehicle to insert the cabin. This requires a considerable commitment in terms of time, personnel and equipment for installing the toilet facilities or performing maintenance on them.

In this context, the technical task underpinning the present invention is to provide a kit for assembling mobile toilet facilities which obviates the drawbacks of the prior art as cited above.

In particular, an object of the present invention is to provide a kit able to allow easy assembly and maintenance of mobile toilet facilities.

The set technical task and aims are substantially attained by a kit for assembling mobile toilet facilities, comprising the technical characteristics set out in one or more of the appended claims.

Further characteristics and advantages of the present invention will become clearer from the indicative, and therefore non-limiting, description of a preferred but not exclusive embodiment of a kit for assembling mobile toilet facilities, as illustrated in the attached drawings, in which:
- figure 1 is a perspective view of a kit for assembling mobile toilet facilities according to the present invention; and
- figure 2 is a detail of the kit for assembling mobile toilet facilities shown in figure 1.

With reference to the appended figures, 1 indicates a kit for assembling mobile toilet facilities according to the present invention.

Such kit 1 comprises a plurality of panels 2. Such panels have the function of forming the walls 3 of a cabin 4.

Preferably, the kit 1 according to the present invention comprises a panel 2 predisposed to form a floor 5 of the cabin 4.

In an embodiment not shown, there may also be a panel 2 adapted to form a ceiling.

In a further embodiment not shown, the kit 1 comprises a floor 5 having movement means for moving the toilet facility from one position to another. Preferably the movement means comprise at least one pair of wheels rotatably fixed at opposite ends of a same side of the floor 5. In this configuration, the toilet facility of the kit 1 is also transportable by one person pushing after slightly lifting the floor 5 (therefore after slightly inclining the whole cabin 4) through an external gripping point arranged on the opposite side to that having the pair of wheels.

In further and different embodiments, also not shown, and equally falling within the scope of the inventive concept of the present invention, the kit 1 may comprise a closed cabin without a floor and/or a ceiling since they are pre-existing elements in an internal compartment of a vehicle, by way of example, the passenger compartment of a tourist coach, the covered area of a boat, a portion of the flat wagon of a railway carriage, and so on. Advantageously, the panels 2 may be of any shape and size necessary for a particular type of cabin 4, according to the place of installation and the desired configuration of the toilet facilities. In particular, it is possible that various panels 2 contribute to forming a single wall 3. The arrangement of the panels 2 is such as to form at least one access opening to such cabin 4 by a user.

The kit 1 further comprises a door 6 associable with the panels 2 to form the already cited cabin 4. The door 6 is such as to prevent the entry and/or exit to and from the cabin 4 through the opening cited above (not identified with a particular reference number).

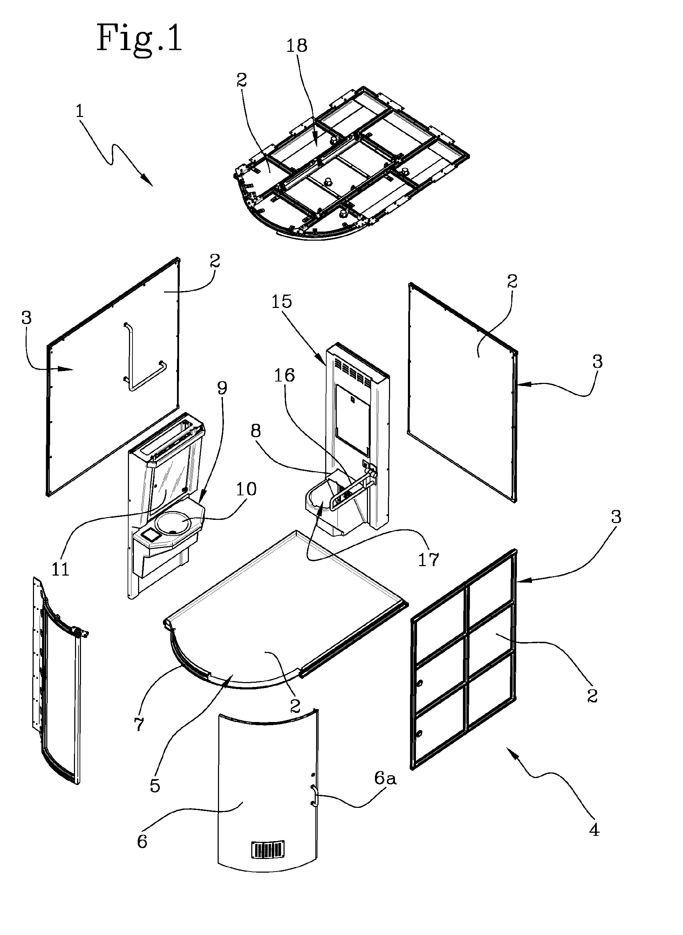

According to the preferred embodiment, the door 6 is of the sliding type, as shown in the appended figure 1. In further detail, the kit 1 comprises at least one guide 7. The door 6 can be inserted in such guide 7, so as to slide with respect to at least one of the walls 3. In other words, the door 6 is slidably mobile within the guide 7. The door 6 further comprises at least one handle 6a for opening and/or closing it.

In an embodiment not shown, the door 6 may be of the hinged type, connectable to at least one wall 3.

In addition, the kit 1 according to the present invention comprises a door 6 that can be inserted in a guide 7 and structured to be reversible, i.e. it may be sliding or fixed to one of the walls 3 forming one side of the opening of the cabin 4, or be sliding or fixed to a wall 3 opposite to the previous one, also forming one side of the opening of the cabin 4 of the toilet facility. The door 6 is switchable between an open configuration, wherein it allows the transit of a user, and a closed configuration wherein it blocks access to the inside of the cabin 4.

The kit 1 further comprises locking means (not shown) associable in particular with the door 6. Such locking means have the function of allowing a user to lock the door 6 in the closed configuration inside the cabin 4. Such locking means are not described further, since they are known to a person skilled in the field.

The kit 1 further comprises a WC 17. In particular the WC 17 is fixable to a wall 3 at a respective housing 8. In other words, the WC 17 is fixable to one of the panels 2 previously described. The WC 17 comprises, in particular, a drain (not shown) associable with a tank for the storage of wastewater or with a sewage drain. The WC 17 further comprises washing means (not shown) which can spray it with water and/or sanitising fluid to clean it.

The kit 1 further comprises a wash basin 9, fixable to one of the panels 2 to be installed inside the cabin 4. In particular the wash basin comprises a tank 10. Dispensing means (not shown) are associated with the tank 10. The tank 10 and, therefore, the wash basin 9, may have any shape or size, according to the installation method and site.

The kit 1, optionally, comprises a mirror 11. Such mirror is fixed to one of the panels 2, preferably to the same panel 2 to which the wash basin 9 is fixed. In particular, the mirror 11 is placed above the wash basin 9.

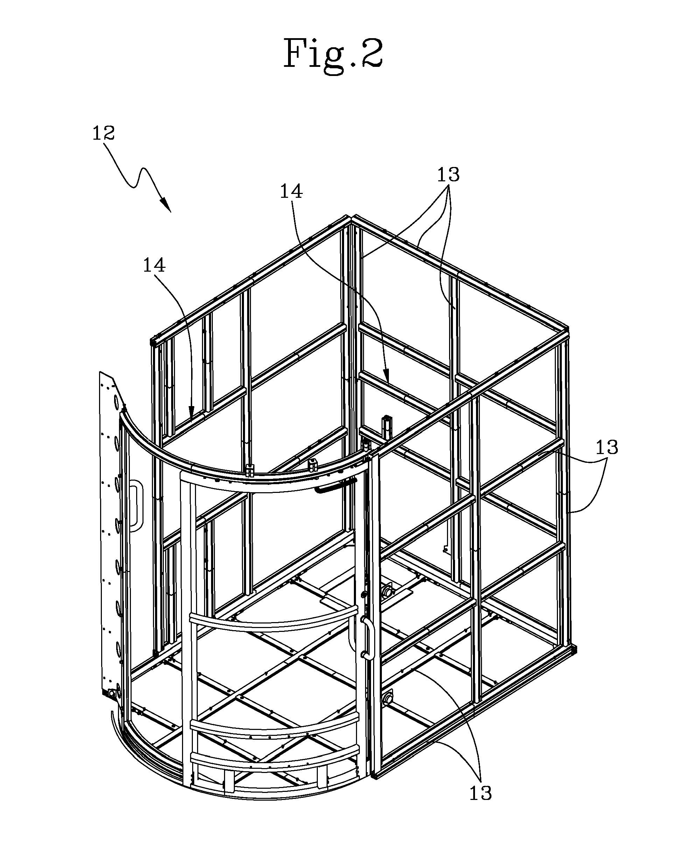

With particular reference to figure 2, the kit 1 comprises a load-bearing frame 12. The panels 2 are in particular fixable to the frame 12, which has the function of supporting them. In detail, the kit 1 comprises a plurality of beams 13 connectable to each other forming the cited frame 12. In other words, the frame 12 is substantially a lattice formed by the beams 13. Advantageously, the frame 12 can comprise one or more reinforcement areas 14 configured so as to support at least the wash basin 9.

Preferably the reinforcement areas 14 are arranged horizontally. Advantageously, the reinforcement areas 14 are such as to give the structure of the frame 12 a higher load-bearing capacity, especially at the reinforcement areas 14 themselves.

Preferably, the reinforcement areas 14 are configured so as to further support a WC 17.

Preferably, the wash basin 9 and the WC 17 are connected at such reinforcement areas 14, in other words the reinforcement areas 14 are such as to enable the assembly of elements of a certain weight that require a stable, fixed and rigid support point, just like the reinforcement areas 14.

According to the inventive concept of the present invention, the floor 5 of the kit 1 is adapted to receive a portion of the load-bearing frame 12 and of the panels 2.

The kit 1 may also comprise a supporting element 15 connectable to the frame 12 and/or to the aforementioned floor 5, if present, so as to support the WC 17. Preferably, the support element 15 could house a box for containing a washing fluid for washing the WC 17. Such box is part of the mentioned washing means for washing the WC 17.

With particular reference to figure 1, the kit 1 can comprise one or more supporting members 16, installable in proximity to the housing 8 for coupling the WC 17. Advantageously, the presence of the supporting members 16 allows the toilet facilities to be used by a disabled user, hence preventing the introduction of architectural barriers in the toilet facilities assembled based on the kit 1 according to the present invention. The supporting members 16 can, according to the various embodiments of the invention, be connected to the panels 2 and/or to the frame 12 and/or to the supporting element 15.

The kit 1 further comprises a hand dryer, not shown, preferably of the hot air type. Said hand dryer is fixable to one of the panels 2. Preferably, the hand dryer is located next to the wash basin 9. In an alternative embodiment, a housing (not shown) is installed in place of the hand dryer for the storage of disposable paper towels.

The kit 1 further comprises a soap dispenser (not shown) fixable to one of the panels 2. In particular, the soap dispenser is located at the wash basin 9.

The kit 1 further comprises water connection means (not shown). Such water connection means connect the wash basin 9 and/or the WC 17 to a water source and/or a drain. Such water connection means comprise in particular a plurality of pipes. In practice, such pipes connect the wash basin 9 to a water source. Such pipes further connect washing means for washing the WC 17 to the same water source or to a different one. Such pipes can also be used to connect the wash basin 9 and/or the WC 17 to a drain. Advantageously, such pipes are provided separately and can be assembled *in situ* hence being adapted to all the requirements consequent to the installation of the kit 1.

Advantageously, the kit 1 further comprises a control unit (not shown) associated at least with the door 6 and configured to open and/or close and/or lock the door 6. In particular, the control unit is configured to engage and/or disengage the locking means of the door 6. Advantageously this makes the cited locking means electronically activatable. In the various embodiments of the invention, in further detail, the control unit comprises an interface (not shown) configured to activate and/or deactivate at least the cited locking means. In some of the possible embodiments of the invention, the control unit can also activate the wash basin 9 and/or the washing means for washing the WC 17.

In detail, the kit 1 further comprises actuation means (not shown) of the door 6, preferably electrical and even more preferably controllable by the mentioned control unit for opening and /or closing the door 6.

The kit 1 further comprises preferably electrical means for lighting the cabin 4, not illustrated. Such lighting means may be one or more lights such as, for example, incandescent or halogen light bulbs or neon tubes. Advantageously, also such lighting means can be activated by the control unit described above.

The kit 1 further comprises electrical wiring means (not shown) associable with at least the control unit for connecting it at least to an electrical power source (such as, for example, a generator or a battery). Furthermore, the wiring means can be used for connecting the control unit to the actuation means and, more generally, to any other device that can be activated by the control unit.

The present invention resolves the proposed technical problem. In fact, the modular nature of the kit described above makes assembly *in situ* possible and easy, making the transport and setting up operations simpler. Furthermore, if the kit is intended to be used on a vehicle, the individual components can be inserted into an internal compartment of the aforementioned vehicle by passing them through the doors, without needing to remove, for example, the roof even only partially or without needing to modify or eliminate parts or elements present in the original configuration of the internal compartment of the vehicle in question. Advantageously, a toilet facility equipped with a base with wheels to make it self-propelled, can also be moved by hand by an operator to temporarily clear a passing area or for loading it into the hold of an articulated lorry for long-distance transport with a motorised vehicle.

## Claims

1. A kit (1) for assembling mobile toilet facilities comprising:
- a plurality of panels (2) for forming walls (3);
- at least one door (6) which can be associated with said panels (2) for forming a cabin (4);
- a WC (17) fixable to one of said panels (2) for being installed inside said cabin (4);
- a wash basin (9) fixable to one of said panels (2) for being installed inside said cabin (4).
**characterised in that** it comprises one or more reinforcement areas (14) which are configured so as to support at least said wash basin (9), said reinforcement areas (14) being arranged horizontally.

2. The kit according to claim 1 **characterised in that** said reinforcement areas (14) are configured so as to further support at least one WC (17).

3. The kit (1) according to any one of the preceding claims, comprising a plurality of beams (13) connectable to each other for forming said frame (12).

4. The kit (1) according to any one of the preceding claims, **characterised in that** it comprises a load-bearing frame (12), said panels (2) being fixable to said load-bearing frame (12).

5. The kit (1) according to claim 4, comprising a floor (5) adapted to receive at least one portion of said load-bearing frame (12) and of said panels (2).

6. The kit according to one of the preceding claims 4 or 5, further comprising a supporting element (15) configured to be connected to said frame (12) and/or to said floor (5) to support at least said WC (17).

7. The kit according to claim 6, comprising a supporting member (16) for a disabled user, said supporting member (16) being connectable to one of said panels (2) and/or to said frame (12) and/or to said supporting element (15) and associated with said WC (17).

8. The kit (1) according to any one of the preceding claims, **characterised in that** it comprises a hand dryer preferably of the hot air type fixable to one of said panels (2).

9. The kit (1) according to any one of the preceding claims, **characterised in that** it comprises a soap dispenser fixable to one of said panels (2).

10. The kit (1) according to any one of the preceding claims, comprising hydraulic connection means between said wash basin (9) and/or said WC (17) and a source of water and/or a drain.

11. The kit (1) according to any one of the preceding claims, comprising a control unit associated at least with said door (6) and designed for opening and/or closing and/or locking said door (6).

12. The kit (1) according to the preceding claim, **characterised in that** it comprises electrical wiring means associable with said control unit, preferably said electrical wiring being of the prefabricated type and already provided with quick-coupling connectors.

13. The kit (1) according to claim 5, wherein said floor (5) comprises movement means for the movement of said toilet facility from one position to another, preferably said movement means comprising at least one pair of wheels fixed rotatably at opposite ends of the same side of said floor (5).

14. The kit (1) according to claim 1, wherein said door (6) is of the sliding type preferably in a guide element (7) and structured to slide with respect to a side wall (3) of said cabin (4) or with respect to an opposite side wall (3) of said cabin (4).
